(19) Europäisches Patentamt

European Patent Office

Office européen des brevets

(11) **EP 1 560 396 A2**

(12) **EUROPEAN PATENT APPLICATION**

(43) Date of publication:
**03.08.2005 Bulletin 2005/31**

(51) Int Cl.7: **H04L 29/06**

(21) Application number: **05001831.6**

(22) Date of filing: **28.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **29.01.2004 KR 2004005864**

(71) Applicant: **Samsung Electronics Co., Ltd.**
**Suwon-si, Gyeonggi-do (KR)**

(72) Inventor: **Kim, Byoung-Chul**
**Yongin-si, Gyeonggi-do (KR)**

(74) Representative: **Lang, Johannes, Dipl.-Ing.**
**Bardehle Pagenberg Dost Altenburg Geissler,**
**Postfach 86 06 20**
**81633 München (DE)**

(54) **Method and apparatus for handling authentication on IPv6 network**

(57)    A method and apparatus handles authentication on an IPv6 network, in which IPv6 security network nodes are allowed to communicate with each other through mutual authentication using secure information transmitted from a certificate authority, thus minimizing the amount of messages exchanged between the certificate authority and each node. Further, it is possible to essentially block nodes accessing to the IPv6 security network maliciously by handling mutual authentication through the exchanged messages when initial authentication is handled between a certificate authority handling authentication on the IPv6 security network and a node accessing to the IPv6 security network.

## FIG. 5

NETWORK INTERFACE UNIT — 31a

ENCRYPTING/DECRYPTING UNIT — 31b

— 31

MESSAGE PROCESSING UNIT

31d

— 31c

ADDRESS PROCESSING UNIT

NODE

**Description**

BACKGROUND OF THE INVENTION

Field of the Invention

The present invention relates to a method and apparatus for handling authentication on an Internet Protocol Version 6 (IPv6) network and, more particularly, to a method and apparatus for handling authentication on an IPv6 network in which respective nodes accessing to an IPv6 security network handle mutual authentication between the respective nodes through secure information transmitted from a certificate authority while performing a duplicate address detection mechanism.

Description of the Related Art

IPv6 has been defined in a Request For Comments (RFC) 2460 (obsoletes 1883) standard.

This IPv6 creates its global address directly through self functions such as a neighbour discovery (ND) mechanism, an address auto-configuration (AAC) mechanism, and a duplicate address detection (DAD) mechanism.

Among these self-mechanisms of the IPv6, first, the neighbour discovery (ND) mechanism includes an address resolution protocol (ARP) mechanism of IPv4 and a mechanism of discovering changes in a network phase and measuring the states of links.

The ND maintains reachable information on paths to active neighbouring nodes and discovers neighbouring routers and prefixes.

Second, the address auto-configuration (AAC) mechanism is a 'Plug-and-Play' mechanism of the IPv6 in which a setting task is not required to endow addresses to nodes. The mechanism creates a routable address automatically and sets a default router automatically.

This mechanism may be an additional mechanism using the ND. To build and manage a network, it recognizes a prefix, a default router, and whether the addresses are duplicated or not.

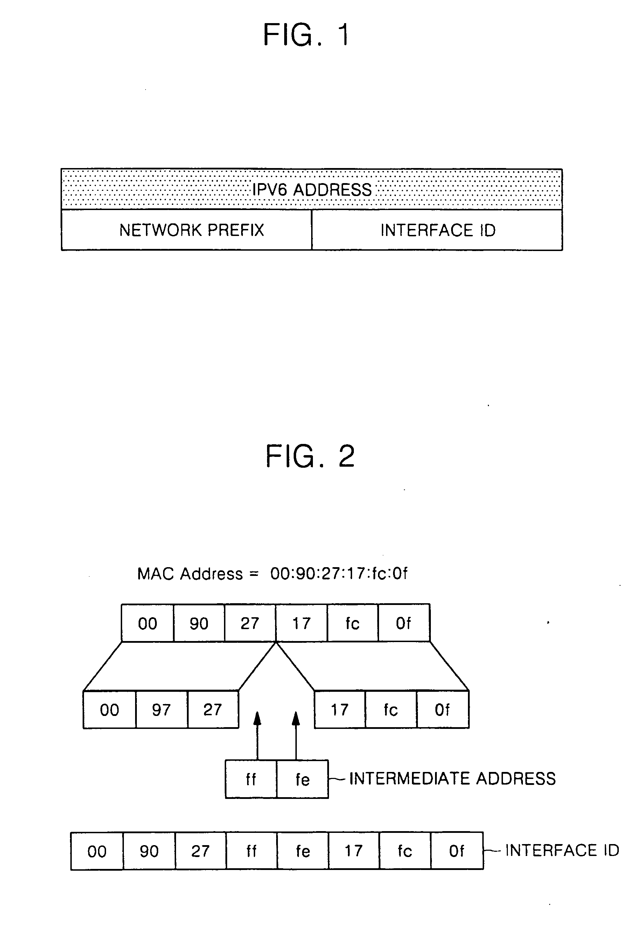

Fig. 1 is a diagram for explaining the configuration of a general IPv6 address.

Referring to Fig. 1, the IPv6 address consists of 128 bits and includes a network prefix of n bits and an interface ID of (128-n) bits.

Fig. 2 is a diagram for explaining an address auto-configuration mechanism of IPv6. A process of creating a global IPv6 address will be described with reference to Fig. 2.

First, the lower 64 bits of the global IPv6 address are configured using a 48-bit Media Access Control (MAC) address in a 128 bit address.

In the IPv6 on the Ethernet, the interface ID indicates an EUI-64 Interface Identifier (Interface ID).

Specifically, as shown in Fig. 2, a 2-byte intermediate address, 'ff:fe', is added in the midpoint of the 48-bit MAC (media access control) address '00:90:27:17:fc:0f', and b2 which is a 7-th bit from the most significant bit in the most significant bytes '00' of the MAC address is set to '1' to obtain '02:90:27:ff:fe:17:fc:0f' that is a lower 64-bit interface ID of the global IPv6 address.

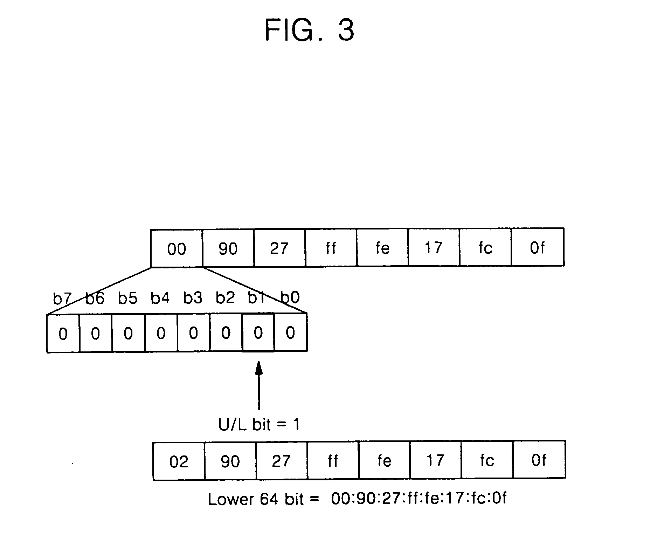

As set forth above, the '02:90:27:ff:fe:17:fc:0f' as the obtained lower 64-bit interface ID is shown in Fig. 3 and is the interface ID of the IPv6 address shown in Fig. 1.

Third, the duplicate address detection (DAD) mechanism confirms whether a created IPv6 address is being used by other nodes or not, in which neighbour solicitation (NS) and neighbour advertisement (NA) messages are used.

That is, a node that has created an IPv6 address through the address auto-configuration mechanism sends the NS message to all nodes connected to the network, and an arbitrary node returns the NA message as a response message if the arbitrary node is using the same IPv6 address as that created by the node transmitting the NS message.

The node sends the NS message to all the nodes in a broadcast manner. The node uses the created IPv6 address if it does not receive the NA message. On the other hand, the node resets the IPv6 address through the address auto-configuration mechanism if it receives the NA message.

To access an IPv6 security network that needs authentication, such nodes using the IPv6 address are required to be authenticated by a certificate authority (CA) capable of authenticating the relevant node.

That is, if a node A and a node B desire to communicate with each other over the IPv6 security network, the node A and the node B are authenticated by the certificate authority while accessing to the IPv6 security network. Then, if a user requests communication with the other node, the node is required to be again authenticated by the certificate authority to communicate with the relevant node.

However, in this communication system, as either the number of nodes accessing the IPv6 security network or traffic amount increases, the number of the messages exchanged between the nodes and the certificate authority results in an exponential increase. Accordingly, use efficiency of the IPv6 security network is rapidly degraded.

Further, the increase in the number of the messages exchanged over the IPv6 security network leads to an increase in load of a processor that handles authentication of the respective nodes in the certificate authority. As a result, it causes a problem that the quality of service in the security network is degraded.

SUMMARY OF THE INVENTION

The present invention, therefore, is conceived to solve the aforementioned and other problems. It is an objective of the present invention to provide a method and apparatus for handling authentication on a IPv6 network in which a certificate authority responsible for security on an IPv6 security network presents secure information to nodes accessing to the IPv6 security network when initially authenticating the nodes, such that the respective nodes authenticated by the certificate authority can communicate with each other through mutual authentication, not via the certificate authority.

It is another object where the present invention manages secure authentication on the IPv6 security network, providing of essentially blocking nodes accessing to the IPv6 security network maliciously by handling mutual authentication through exchanged messages when initial authentication is handled between a certificate authority handling authentication on the IPv6 security network and a node accessing to the IPv6 security network.

It is yet another objective of the present invention to provide a method and apparatus for handling authentication on an Internet protocol network that is efficient, easy to implement and cost effective.

According to one aspect of the present invention for achieving the above and other objectives, there is provided an authentication handling system including a certificate server for storing at least one node information and address information to be assigned to the nodes and when receiving an access message from any of the nodes accessing to a network, transmitting an authentication message containing address information assigned to the node and secure information; and at least one node connected to the certificate server for transmitting the access message to the certificate server, creating an IP (Internet protocol) address using the address information transmitted through the authentication message, and handling mutual authentication with the other node through the IP address and the secure information.

According to another aspect of the present invention, there is provided a system for handling authentication on an IPv6 network including a first node for encrypting node information to transmit the encrypted node information as an authentication request message, decrypting a response message responsive to the authentication request message with a secret key transmitted from the certificate server to recognize secure information for the other node, and transmitting an authentication confirmation message to authenticate the other node if the respective information is the same as secure information transmitted from the certificate server; and a second node for encrypting the secure information with a secret key transmitted from the certificate server to transmit the encrypted secure information as the response message when receiving the authentication request message from the first node, and authenticating the first node when receiving the authentication confirmation message from the first node.

In addition, according to yet another aspect of the present invention, there is provided a node in an IPv6 network transmitting an authentication request message containing encrypted node information when communication with the other node is requested, decrypting a response message responsive to the authentication request message with a secret key transmitted from the certificate server to recognize secure information for the other node, and transmitting an authentication confirmation message for authenticating the other node to initiate communication with the other node if the recognized secure information is the same as secure information transmitted from the certificate server.

Further, according to yet another aspect of the present invention, there is provided a certificate server on an IPv6 network including a storage unit for storing at least one node information and address information to be assigned to the relevant node; and an authentication handling unit for confirming whether the node is authorized to connect or not, through retrieval of the storage unit when receiving a connection message transmitted from the node over the IP network and, if the node is authorized to access, transmitting an authentication message to the node, the authentication message containing cryptograph information obtained by encrypting address information corresponding to the node with a secret key, and the secret key information.

Meanwhile, according to yet another aspect of the present invention, there is provided a method for handling authentication including the steps of: setting, by a certificate server, at least one node information and address information to be assigned to nodes; having access, by an arbitrary node of the nodes, to the certificate server to transmit an access message containing the node information; determining, by the certificate server, whether the node is authorized to access or not when receiving the access message, and if the node is authorized to access, sending to the node an authentication message containing address information and secure information assigned to the node; and creating, by the node, an IP address using the address information and handling mutual authentication with the other node through the secure information.

In the method for handling authentication according to the present invention, the step of processing the mutual authentication includes the sub-steps of sending an authentication request message to the other node if a user requests communication with the other node, and recognizing the secure information from a response message responsive to the authentication request message; and comparing the secure information for the other node with its own secure information and authenticating the other node if the secure information for the other node is valid.

In addition, according to yet another aspect of the present invention, there is provided a method for handling mutual authentication between nodes in an IP network including the steps of: sending, by a first node, an authentication request message obtained by encrypting node information to a second node; encrypting and sending, by the second node, secure information as a response message responsive to the authentication request message with a secret key transmitted from the certificate server; decrypting the response message with the secret key transmitted from the certificate server to recognize the secure information for the second node when receiving the response message from the second node, and sending an authentication confirmation message for authenticating the second node if the respective information is the same as the secure information transmitted from the certificate server; and authenticating, by the second node, the first node when receiving the authentication confirmation message.

According to yet another aspect of the present invention, there is provided a method for handling authentication at nodes in an IPv6 network, including the steps of: sending an authentication request message containing encrypted node information to the other node when communication with the other node is requested; decrypting a response message received from the other node with a secret key transmitted from the certificate server to recognize secure information for the other node; and determining whether the recognized secure information is the same as the secure information transmitted from the certificate server and, if the same, sending an authentication confirmation message for authenticating the other node to initiate communication with the other node.

Further, according to yet another aspect of the present invention, there is provided a method for handling authentication at a certificate server on an IPv6 network, including the steps of setting at least one node information and address information to be assigned to a relevant node; when receiving a connection message transmitted from an arbitrary node of the nodes that connects over the IP network, confirming whether the node is authorized to connect, based on the set node information; and if the node is authorized to connect, sending an authentication message, the authentication message containing cryptograph information obtained by encrypting the address information corresponding to the node with a secret key, and the secret key information.

In the method for handling authentication at a certificate server on an IPv6 network according to the present invention, the step of transmitting the authentication message includes the sub-step of recognizing node information for the node from the connection message and including the node information into the authentication message to notify that the certificate server is a certificate server authenticating the node.


BRIEF DESCRIPTION OF THE DRAWINGS

A more complete appreciation of this invention, and many of the attendant advantages thereof, will be readily apparent as the same becomes better understood by reference to the following detailed description when considered in conjunction with the accompanying drawings in which like reference symbols indicate the same or similar components, wherein:

Fig. 1 is a diagram for explaining the configuration of a general IPv6 address;

Fig. 2 is a diagram for explaining an address auto-configuration mechanism of IPv6;

Fig. 3 is a diagram for explaining an interface ID of an IPv6 address created by an address auto-configuration mechanism;

Fig. 4 is an entire block diagram for explaining the configuration of a general IPv6 security network;

Fig. 5 is an internal block diagram for explaining the configuration of a node according to a preferred embodiment of the present invention;

Fig. 6 is an internal block diagram for explaining an internal configuration of a certificate authority according to a preferred embodiment of the present invention;

Fig. 7 is a diagram for explaining a flow of a method by which each node is authenticated by a certificate authority according to a preferred embodiment of the present invention;

Fig. 8 is a diagram for explaining a flow of a method for mutual authentication between respective nodes according to a preferred embodiment of the present invention;

Fig. 9 is a diagram for explaining a flow of a method by which nodes communicate with each other over an IPv6 security network according to a preferred embodiment of the present invention; and

DETAILED DESCRIPTION OF THE INVENTION

A preferred embodiment of the present invention will be described herein below with reference to the accompanying drawings. In the following description, well-known functions or construction are not described in detail since they would obscure the invention in unnecessary detail.

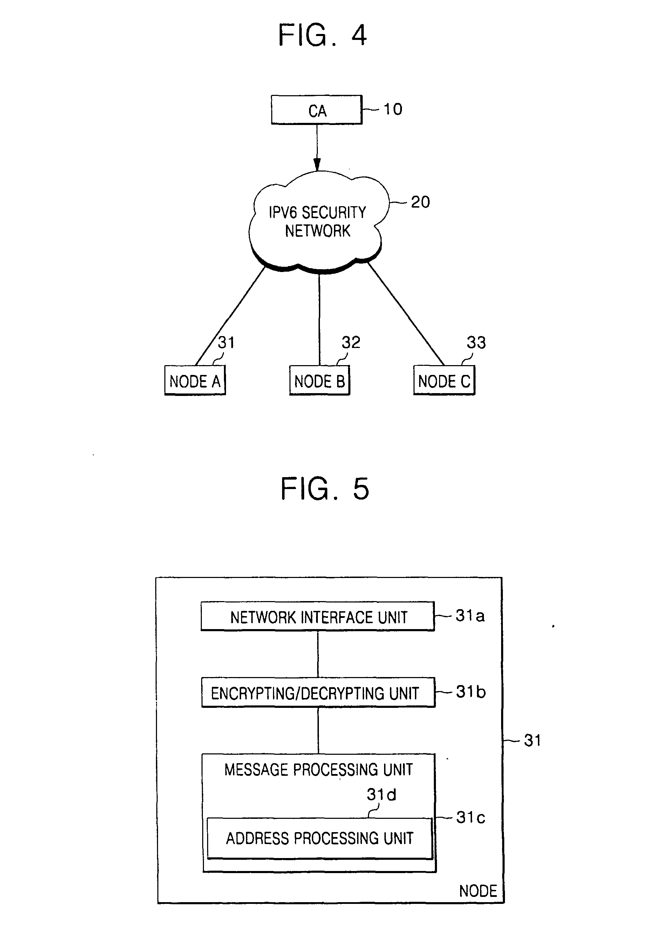

Fig. 4 is an entire block diagram for explaining a configuration of a general IPv6 security network.

As shown in Fig. 4, an IPv6 security network includes a number of nodes 31 to 33, and a certificate authority (CA) 10 for authenticating and managing the respective nodes 31 to 33.

The nodes 31 to 33 refer to devices implementing the IPv6, the CA 10 refers to an authority that determines whether security is proper and that issues and manages a public key, a private key and a secret key used to encrypt and decrypt messages.

The public key is a key value provided from a designated CA 10 and is combined with a private key created from this public key so that it is effectively used to encrypt and decrypt a message and an electronic signature. A manner of combining the public key and the private key is known as an asymmetric cryptography. A system with the public key is called a public key infrastructure (PKI).

The private key refers to a key that only parties exchanging secret messages for encryption/decryption know. In an encrypting and decrypting scheme with the secret key, only parties knowing the secret key are allowed to encrypt and decrypt respective messages.

Fig. 5 is an internal block diagram for explaining the configuration of a node according to a preferred embodiment of the present invention.

Referring to Fig. 5, a node 31 according to the present invention includes a network interface unit 31 a, an encrypting/decrypting unit 31 b, and a message processing unit 31c, and the message processing unit 31c includes an Address processing unit 31d.

The Address processing unit 31d determines an IPv6 address to be used by the node 31 through an address auto-configuration mechanism, and creates a tentative address. When receiving an intermediate address from the CA 10 for creating the IPv6 address, the Address processing unit 31d creates the IPv6 address using the intermediate address.

The message processing unit 31 c produces a random number, generates an NS message using random number information and password information, and transmits them to the CA 10.

In addition, the message processing unit recognizes the secret key information and intermediate address information from an NA message transmitted from the CA 10.

Further, after the node is authenticated by the CA 10, the message processing unit 31c produces a communication request message when a user requests communication with other nodes 32 and 33, transmits the communication request message to the other nodes 32 and 33, and determines whether the other nodes 32 and 33 are nodes authenticated by the CA 10, based on a response message trans-

The encrypting/decrypting unit 31b encrypts the message produced by the message processing unit 31c with a public key of the relevant node 31 or a secret key transmitted from the CA 10, and decrypts the message transmitted from the other nodes 32 and 33 or the CA 10 with the private key or the secret key.

The network interface unit 31a receives the message that is transmitted over the IPv6 security network 20 from the CA 10 or the other nodes 32 and 33, and transmits the message, produced by the message processing unit 31c, to the CA 10 or the other nodes 32 and 33 over the IPv6 security network 20.

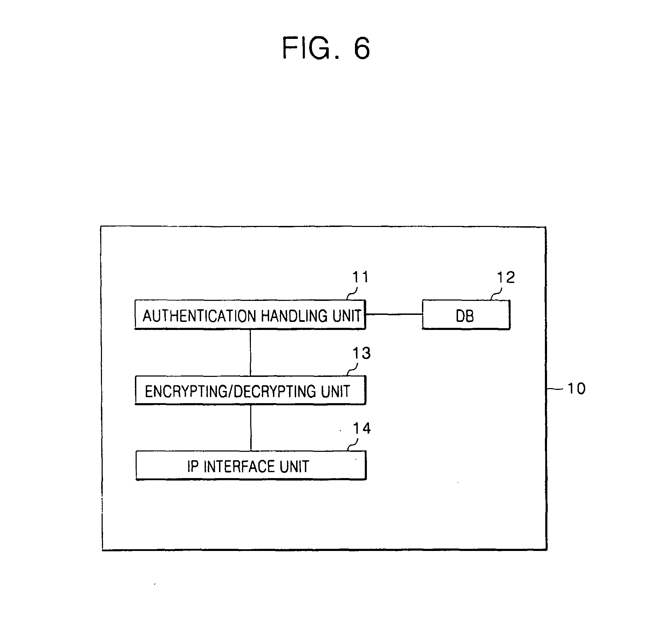

Fig. 6 is an internal block diagram for explaining an internal configuration of a certificate authority according to a preferred embodiment of the present invention.

Referring to Fig. 6, a certificate authority (CA) 10 according to the present invention includes an authentication handling unit 11, an encrypting/decrypting processing unit 13, an IP interface unit 14, and a database 12.

The IP interface unit 14 receives an NS message transmitted from the nodes 31 to 33 over the IPv6 security network 20, and transmits an NA message produced by the CA 10 to the nodes 31 to 33 over the IPv6 security network 20.

The encrypting/decrypting processing unit 13 decrypts the NS message transmitted from the nodes 31 to 33 with a private key of the CA 10, and encrypts the NA message produced by the CA 10 with a public key of each of the nodes 31 to 33.

Further, the encrypting/decrypting processing unit 13 encrypts intermediate address information that the CA 10 sends to the respective nodes 31 to 33, with the secret key.

The DB (database) 12 stores the intermediate address information, which will be assigned to the respective nodes 31 to 33 that has been authorized to access the IPv6 security network 20, in the form of an intermediate address table.

This intermediate address table may be configured as in the following table 1.

Table 1

| Node information | Intermediate address information |
|---|---|
| Node A | 1A:1B |
| Node B | 1B:1A |
| | |

As denoted in Table 1, the intermediate address table includes information on the respective nodes 31 to 33 authorized to access the IPv6 security network 20 and intermediate address information assigned to the relevant nodes 31 to 33.

When receiving the NS message from the node A 31, the CA 10 allows the node A 31 to use an IPv6 address containing intermediate address information of '1A:1B' and the node B 32 to use an IPv6 address containing an intermediate address of '1B:1A' if the node A 31 is authorized to access the IPv6 security network 20.

At this time, it is preferable that each of the intermediate addresses stored in the intermediate address table is unique in one IPv6 security network 20, such that a plurality of nodes 31 to 33 using the same IPv6 address do not exist in one IPv6 security network 20.

When receiving the NS messages from the nodes 31 to 33, the authentication handling unit 11 determines whether the relevant nodes 31 to 33 are authorized to access the IPv6 security network 20. If so, the authentication handling unit 11 retrieves intermediate address information to be assigned to the relevant nodes 31 to 33 from the DB 12, and produces an NA message including the intermediate address information.

Further, the authentication-processing unit 11 includes secure information in the produced NA message to allow the respective nodes 31 to 33 authorized to access the IPv6 security network 20 to communicate with each other.

At this time, the secure information transmitted from the CA 10 to the respective nodes 31 to 33 may be secret key information, intermediate address information, or the like used by the respective nodes 31 to 33 accessing the IPv6 security network 20.

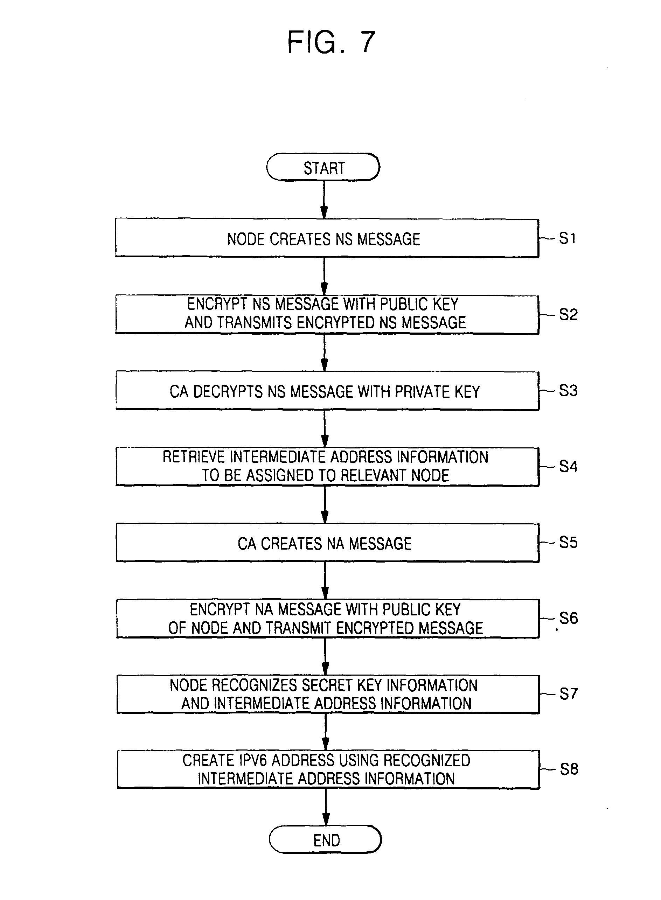

Fig. 7 is a flowchart for explaining the flow of a method by which each node is authenticated by a certificate authority according to a preferred embodiment of the present invention.

Referring to Fig. 7, the Address processing unit 31d of the node 31 creates an IPv6 address through the address auto-configuration mechanism in order to access the IPv6 security network 20, and the message processing unit 31c creates an NS message using the IPv6 address information created by the Address processing unit 31d (S1).

The encrypting/decrypting unit 31b of the node 31 encrypts the NS message created by the message processing unit 31c with the public key of the CA 10, and transmits the encrypted NS message to the CA 10 over the IPv6 security network 20 (S2).

The IP interface unit 14 of the CA 10 receives the NS message transmitted from the node 31, and the encrypting/decrypting processing unit 13 decrypts the NS message with the private key of the CA 10 (S3).

The authentication handling unit 11 determines whether the node 31 transmitting the NS message has been authorized to access the IPv6 security network 20 through retrieval of the intermediate address table stored in the DB (database) 12. If the node has been authorized to access, the authentication handling unit 11 retrieves intermediate address information to be assigned to the relevant node 31 (S4).

The authentication handling unit 11 of the certificate authority 10 creates an NA message containing the intermediate address information retrieved from the intermediate address table and secret key information used by the IPv6 security network 20 (S5).

The encrypting/decrypting processing unit 13 encrypts the NA message created by the authentication handling unit 11 with the public key of the node 31, and transmits the encrypted message to the node 31 over the IP network 14 (S6).

The encrypting/decrypting unit 31b of the node 31 decrypts the NA message transmitted from the CA 10 with the private key, and the message processing unit 31c recognizes the secret key information and intermediate address information contained in the NA message (S7).

The Address processing unit 31d creates an IPv6 address using the intermediate address information recognized by the message processing unit 31c (S8).

For example, a method by which the node A 31 is authenticated by the CA 10 will be simply described. First, the node 31 creates a tentative address through the address auto-configuration mechanism.

In other words, if an interface MAC (media access control) address of the node A 31 is '0A:00:2B:3B:70:1E' and a network prefix is '3FFE:2E01:DEC1::/64', the Address processing unit 31d of the node A 31 creates '3FFE:2E01:

DEC1::0A00:2BFF:FE3B:701E' as the IPv6 address.

The message processing unit 31c of the node A 31 creates a random number RN(A) and creates an NS message using the created random number information RN(A) and password information PW(A).

Here, the PW(A) refers to information with which the CA 10 authenticates the node A 31. This PW(A) may correspond to ID (identification) information and password information of the node 31.

The RN(A) refers to the random number information created by the node A 31. This random number information is information used for the CA 10 to intercept a message from an intrusion node (not shown) that attempts malicious access.

Creating the NS message using the password information PW(A) and the random number information RN(A) by the node A 31 is because the node 31 transmits the NS message to the network in a broadcast manner, which enables any node (not shown) accessing to the IPv6 security network 20 with malicious purposes other than the CA 10 to receive the NS message, resulting in a high possibility for such a malicious node to transmit a falsely created NA message to the node A 31.

Accordingly, in order to prevent the malicious node from creating the NA message, the node A 31 encrypts the NS message containing the random number information RN(A) with the public key of the CA 10 and transmits the encrypted NS message, and only the CA 10 is allowed to decrypt the random number information RN(A). The CA 10 decrypts the random number information RN(A) transmitted from the node A 31, encrypts and transmits the NA message with the public key of the node A 31, so that it is confirmed that it is the NA message which the CA 10 transmits to authenticate the node.

Further, the authentication handling unit 11 of the CA 10 retrieves '1A:1B', which is the intermediate address information DA(A) to be assigned to the node A 31, from the intermediate address table, encrypts the retrieved address information with the secret key of the IPv6 security network 20, encrypts the intermediate address information DA(A) encrypted with the secret key, the secret key information SS(C) and the random number information RN(A) of the node A 31 with the public key of the node A 31 to create an NA message, and transmits the created NA message to the node A 31.

The encrypting/decrypting unit 31b of the node A 31 decrypts the NA message transmitted from the CA 10 with its own private key, and the message processing unit 31c recognizes the random number information RN(A) from the NA message to confirm whether it is the random number information RN(A) created by the message processing unit 31 c.

When the random number information of the transmitted NA message is the random number information RN(A) created by the message processing unit 31b, the message processing unit 31b recognizes the intermediate address information DA(A) and the secret key information SS(C), and provides the recognized secret key information SS(C) to the encrypting/decrypting unit 31b and the intermediate address information DA(A) to the Address processing unit 31d.

The Address processing unit 31d creates an IPv6 address using the intermediate address information DA(A) provided from the message processing unit 31c, and the encrypting/decrypting unit 31b encrypts/decrypts messages exchanged with the other nodes 32 and 33 with the secret key SS(C) when the communication with the other nodes 32 and 33 is established.

In other words, the Address processing unit 31d creates '3FFE:2E01:DEC1::0A00:2B1A:1B3B:701E' as the IPv6 address using '1A:1B' which is the intermediate address information DA(A) transmitted from the CA 10.

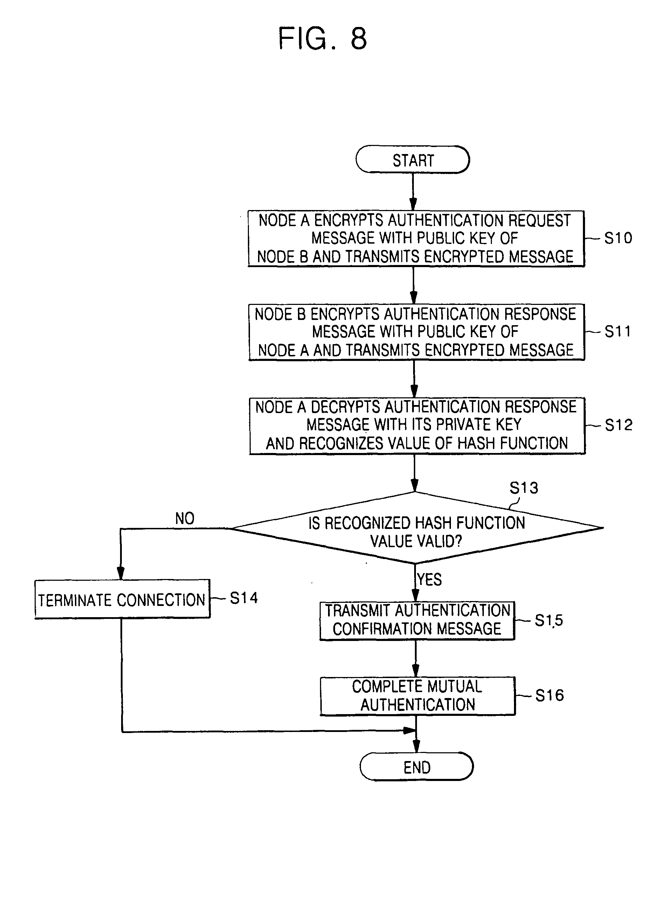

Fig. 8 is a diagram for explaining a flow of a method for mutual authentication between respective nodes according to a preferred embodiment of the present invention.

Referring to Fig. 8, a description will be made as to a case where node A 31 requests node B 32 to authenticate the node A 31.

When a user requests communication with the node B 32, the message processing unit 31c of the node A 31 creates random number information RN(A). The encrypting/decrypting unit 31b encrypts the random number information with the public key of the node B 32 and sends the encrypted random message to the node B 32 through the network interface unit 31 a (S10).

That is, the node A 31 encrypts an authentication request message with the public key of the node B 32 and transmits the encrypted authentication request message.

The encrypting/decrypting unit 32b of the node B 32 decrypts the authentication request message received through the network interface unit 32a with the private key of the node B 32, and the message processing unit 32c creates the random number information RN(B).

The message processing unit 32c encrypts half a function value of a hash function with the random number information RN(A) of the node A 31, the created random number information RN(B), the intermediate address information DA(A) of the node A 31, and the intermediate address information DA(B) of the message processing unit 32c as its variables; the random number information RN(A) of the node A 31; and the random number information RN(B) of the node B 32 with the public key of the node A 31 to create an authentication response message, and transmits the created authentication response message to the node A 31 (S11).

Here, the intermediate address information DA(A) and DA(B) from the CA 10 received by the node A 31 and the node B 32 may be recognized by decrypting the information using the secret key information SS(C) transmitted from the CA 10.

That is, the node B 32 encrypts the authentication response message responsive to the authentication request message transmitted from the node A 31 with the public key of the node A 31, and transmits the encrypted message.

The encrypting/decrypting unit 31b of the node A 31 decrypts the authentication response message received via the network interface unit 31a with its own private key (S12), and the message processing unit 31c sums the function value of the hash function contained in the authentication response message and half its own hash function value, and determines whether the sum becomes one hash function value (S 13).

That is, the message processing unit 31c of the node A 31 sums half a function value transmitted from the node B 32 and half a value of its own hash function and determines whether the sum becomes a correct hash function value. If the sum becomes the correct hash function value, the message processing unit 31c determines that the hash function value transmitted from the node B 32 is valid.

At this time, if the first half of the hash function value is contained in the authentication response message transmitted from the node B 32, the node A 31 can sum the second half of the hash function value and the transmitted hash function value.

Meanwhile, if the hash function value contained in the authentication response message transmitted from the node B 32 is extracted from an arbitrary part, the node A 31 transmitting the authentication request message adds a hash function value of another part to the hash function value contained in the authentication response message.

When determining that the total hash function value obtained by summing the hash function value contained in the authentication response message and its own hash function value is not correct, the message processing unit 31c of the node A 31 determines the node B 32 to be a node not authorized to access the IPv6 security network 20 and terminates the connection (S 14).

On the other hand, when determining that the total hash function values are correct, the message processing unit 31 c of the node A 31 encrypts a remaining hash function value except for the hash function value transmitted from the node B 32, and the random number information RN(B) of the node B 32 with the public key of the node B 32, creates an authentication confirmation message, and transmits the created authentication confirmation message to the node B 32 (S 15).

The encrypting/decrypting unit 32b of the node B 32 decrypts the authentication confirmation message with the private key. The message processing unit 32c determines whether the remaining half of the hash function value contained in the authentication confirmation message is valid, and if so, determines that mutual authentication with the node A 31 has been completed to initiate communication with the node A 31 (S16).

For example, a method by which mutual authentication between the respective nodes 31 and 32 is made over the IPv6 security network 20 will be discussed. First, the node A 31 creates a random number RN(A) to be used for authentication, encrypts the random number with the public key PK(B) of the node B 32, and transmits the encrypted random number as an authentication request message to the node B 32.

The node B 32 creates a random number RN(B) for mutual authentication with the node A 31, and creates an authentication response message for the mutual authentication using a hash function.

At this time, creating the authentication response message using the hash function is intended to make mutual authentication between the nodes 31 and 32 by using a characteristic of a hash function that it is difficult to derive a variable value from a hash function value.

Hereinafter, the hash function will be simply discussed. The following equation 1 represents the hash function.

Equation 1

$$h(M) \rightarrow H$$

'h' indicates a hash function, 'M' indicates a variable used for the hash function, and 'H' indicates a hash function value derived from the variable 'M'.

For the hash function used for the mutual authentication, a sender simultaneously sends a function value of the hash function and its variables, and a receiver derives a function value from the variable using the same hash function and compares the derived function value with the transmitted function value.

The receiver authenticates the sender if the derived function value and the transmitted function value are the same.

That is, the node B 32 recognizes the intermediate address information DA(B) assigned to the node B 32 and the intermediate address information DA(A) assigned to the node A 31 using the secret key SS(C) received while being authenticated by the CA 10.

The message processing unit 31 c of the node B 32 encrypts half a value of the hash function with the random number information RN(A) of the node A 31, its own random number information RN(B), the intermediate address information DA(A) of the node A 31, and its own intermediate address information DA(B) as its variables; the random number information RN(A) of the node A 31; and its own random number information RN(B) with the public key of the node A 31, and transmits it as the authentication response message.

At this time, the node B 32 can determine that the node A 31 is an authenticated node on condition that the IPv6 address of the authentication request message transmitted from the node A 31 is correctly encrypted with the secret key SS(C) received from the CA 10 because 16 bits of the lower 64 bits of the IPv6 address is encrypted with the secret key SS(C) received from the CA 10 when the node A 31 is a node authenticated by the CA 10.

Further, the hash function contained in the authentication response message transmitted from the node B 32 uses, as its variables, the random number information RN(A) of the node A 31 and the random number information RN(B) of the node B 32 along with the intermediate address information DA(A) of the node A 31 and the intermediate address information DA(B) of the node B 32. Accordingly, the hash function value is not fixed, but is changed whenever authentication is attempted, thereby guaranteeing excellent security.

The encrypting/decrypting unit 31b of the node A 31 decrypts the authentication response message transmitted from the node B 32 with its own private key, and the message processing unit 31c sums the hash function value within the decrypted authentication response message and its hash function value since the decrypted authentication response message contains only half of the hash function value, and determines whether the transmitted hash function value is valid.

Further, when determining that the hash function value is valid, the message processing unit 31c transmits an authentication confirmation message to the node B 32 to indicate that the mutual authentication with the node B 32 has been completed.

At this time, the node A 31 includes and transmits a remaining hash function value except for the hash function value transmitted from the node B 32 into the transmitted authentication confirmation message.

The node B 32 determines whether half the value of the hash function contained in the authentication confirmation message transmitted from the node A 31 is valid. If the value is valid, the node B 32 determines that mutual authentication with the node A 31 is completed and initiates communication with the node A 31.

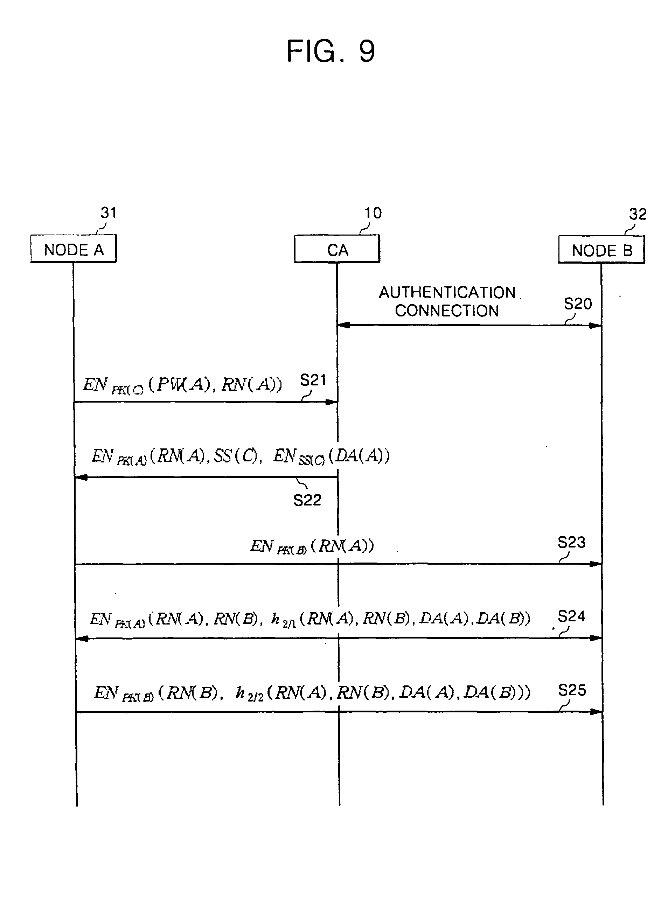

Fig. 9 is a diagram for explaining a flow of a method by which nodes communicate with each other over an IPv6 security network according to a preferred embodiment of the present invention.

Referring to Fig. 9, first, the node B 32 is authenticated by the CA 10. The node B 32 is then connected to the IPv6 security network 20 using the IPv6 address that uses the intermediate address information DA(B) transmitted from the CA 10 (S20).

In the case where the node A 31 is newly connected to the IPv6 security network 20, the Address processing unit 31d of the node A 31 creates a tentative address through an address auto-configuration mechanism.

The message processing unit 31 c produces a random number RN(A), and produces an NS message using password information PW(A) and random number information RN(A). The encrypting/decrypting unit 31b encrypts the created NS message with the public key of the CA 10 ($EN_{PK(C)}$), and transmits it to the CA 10 via the network interface unit 31a ($EN_{PK(C)}$ (PW(A), RN(A))) (S21).

When receiving the NS message from the node A 31, the CA 10 decrypts the NS message with the private key, determines whether the node A 31 is authorized to access the IPv6 security network 20 through retrieval of the intermediate address table, and, if so, retrieves the intermediate address information DA(A) to be assigned to the node A 31.

Further, the CA 10 encrypts the retrieved intermediate address information DA(A) with the secret key, encrypts the secret key information SS(C), the recognized random number information RN(A) of the node A 31, and the intermediate address information encrypted with the secret key ($EN_{SS(C)}$DA(A)) with the public key of the node A 31 ($EN_{PK(A)}$), and transmits them as the NA message ($EN_{PK(A)}$(RN(A),SS(C) and $EN_{SS(C)}$DA(A)) (S22).

The encrypting/decrypting unit 31b of the node A 31 decrypts the NA message transmitted from the CA 10 with the private key, and the message processing unit 31c recognizes the secret key information SS(C) transmitted from the CA 10.

Further, the message processing unit 31b determines that the CA 10 transmitting the NA message is a correct CA 10 in the IPv6 security network 10 if its own random number information RN(A) contained in the NA message is correct. That is, the message processing unit 31b determines that the CA 10 is not a malicious node accessing to the IPv6 security network 20 with malicious purposes and transmitting a false NA message responsive to the NS message transmitted from the node A 31, but is the correct CA 10 in the IPv6 security network 20.

The encrypting/decrypting unit 31b decrypts the intermediate address information DA(A) with the secret key SS(C) recognized by the message processing unit 31c, and the Address processing unit 31d creates the IPv6 address using the intermediate address information DA(A) decrypted by the encrypting/decrypting unit 31b.

If a user requests communication with the node B, the message processing unit 31 of the node A 31 creates a random number RN(A) to produce an authentication request message.

The encrypting/decrypting unit 31b encrypts the produced authentication request message with the public key of the node B 32 ($EN_{PK(B)}$), and transmits the encrypted authentication request message to the node B 32 via the network interface unit 31a ($EN_{PK(B)}(RN(A))$) (S23).

The encrypting/decrypting unit 32b of the node B 32 decrypts the authentication request message transmitted from the node A 31 with the private key, and the message processing unit 32c creates a random number RN(B) for mutual authentication with the node A 31.

The message processing unit 32c encrypts half a value of a hash function with the intermediate address information DA(A) of the node A 31, its own intermediate address information DA(B), the random number information RN(A) of the node A 31, and the created random number information RN(B) as its variables; the random number information RN(A) of the node A 31 and the created random number information RN(B) with the public key of the node A 31 ($EN_{PK(A)}$), and transmits them as an authentication response message ($EN_{PK(A)}(RN(A), RN(B), h_{2/1}(RN(A),RN(B),DA(A),DA(B)))$) (S24).

The encrypting/decrypting unit 31b of the node A 31 decrypts the authentication response message transmitted from the node B 32 with the private key, and the message processing unit 31c determines whether a function value obtained by adding its own half of the hash function value to half of the hash function value contained in the authentication response message is valid. If so, it encrypts its own remaining half of the hash function value and the random number information RN(B) of the node B 32 with the public key of the node B 32 ($EN_{PK(B)}$), and transmits it as the authentication confirmation message ($EN_{PK(B)}(RN(B), h_{2/2}(RN(A),RN(B),DA(A),DA(B)))$) (S25).

The encrypting/decrypting unit 32b of the node B 32 decrypts the authentication confirmation message transmitted from the node A 31 with the private key, and the message processing unit 32c determines whether half the hash function value contained in the authentication confirmation message is valid. If so, the message processing unit 32c determines that mutual authentication for communication over the IPv6 security network 20 is completed and initiates communication with the node A 31.

Although the present invention has been described in detail in connection with the detailed examples, it will be apparent to those skilled in the art that various variations and modifications may be made to the present invention without departing the technical spirit of the present invention and, of course, such variations and modifications fall in the appended claims.

As described above, according to the present invention, there is an advantage that the certificate authority, which manages secure authentication on the IPv6 security network, notifies secure information capable of handling mutual authentication between respective nodes while performing authentication of connecting nodes, thus handling mutual authentication so that nodes accessing the IPv6 security network communicate with the other nodes without additional message exchange with the certificate authority.

Further, there is an advantage that it is possible to essentially block nodes accessing to the IPv6 security network maliciously by handling mutual authentication through exchanged messages when initial authentication is handled between a certificate authority handling authentication on the IPv6 security network and a node accessing to the IPv6 security network.

**Claims**

1. A system for handling authentication for a plurality of nodes, the system comprising:

   a certificate server for storing at least one node information and address information to be assigned to the nodes and when receiving a message from any of the nodes accessing to a network, transmitting an authentication message containing address information assigned to the node and secure information; and

   at least one node connected to said certificate server for transmitting the message to said certificate server, creating an Internet protocol address using the address information transmitted through the authentication message, and handling mutual authentication with the other node through the Internet protocol address and the secure information.

2. The system according to claim 1, wherein the message contains at least one node information of identification information, password information, and randomly created random number information of the node.

3. The system according to claim 1, wherein the secure information is at least one of secret key information used in an Internet protocol network, address information encrypted with the secret key, and function value information obtained by performing hash function processing with at least one of the node information and the secure information as a variable.

4. The system according to claim 1, wherein said certificate server recognizes node information from a message and includes the node information into the authentication message when receiving the connection message from the node.

5. The system according to claim 1, wherein the node determines said certificate server to be a malicious node to terminate connection when the node information as authentication confirmation information is not contained in the authentication message.

6. The system according to claim 1, wherein the certificate server encrypts the authentication message with a public key of a relevant node, the authentication message containing address information encrypted with a secret key, and decrypts a message with a private key.

7. The system according to claim 1, wherein each of the nodes encrypts a message with a public key of the certificate server and decrypts the authentication message with its own private key.

8. The system according to claim 1, wherein each of the nodes transmits an authentication request message to the other node when a user requests communication with the other node, recognizes the secure information from a response message responsive to the authentication request message, compares the secure information for the other node with its own secure information, and authenticates the other node to initiate communication with the other node when the secure information for the other node is valid.

9. A system for handling authentication on an Internet Protocol version 6 network, which comprises a certificate server and at least one node, the system comprising:

a first node for encrypting node information to transmit the encrypted node information as an authentication request message to the other node, decrypting a response message responsive to the authentication request message with a secret key transmitted from the certificate server to recognize secure information for the other node, and transmitting an authentication confirmation message to authenticate the other node when the respective information is the same as secure information transmitted from the certificate server; and
a second node for encrypting the secure information with a secret key transmitted from the certificate server to transmit the encrypted secure information as the response message when receiving the authentication request message from the first node, and authenticating the first node when receiving the authentication confirmation message from the first node.

10. The system according to claim 9, wherein each of the nodes recognizes the secure information for the other node when receiving the authentication confirmation message from the other node, compares the secure information for the other node with the secure information transmitted from the certificate server, and authenticates the other node when the secure information for the other node is valid.

11. The system according to claim 9, wherein the secure information is at least one of secret key information used in the Internet protocol network, address information encrypted with the secret key, and function value information obtained by performing hash function processing with at least one of the node information and the secure information as a variable.

12. The system according to claim 9, wherein each of the nodes includes half the function value information into the response message, and further includes function value information except for the included function value information into the authentication confirmation message.

13. An apparatus, comprising of:

a node connected to a security network comprising a certificate server, said node in an Internet Protocol version 6 network transmitting an authentication request message including encrypted node information when communication with the other node is requested, decrypting a response message responsive to the authentication request message with a secret key transmitted from said certificate server to recognize secure information for the other node, and transmitting an authentication confirmation message for authenticating the other node to initiate communication with the other node when the recognized secure information is the same as secure information transmitted from said certificate server.

14. A certificate server for handling authentication for at least one node in an Internet Protocol version 6 network, the certificate server comprising:

a storage unit for storing at least one node information and address information to be assigned to the relevant node; and

an authentication handling unit for confirming whether the node is authorized to connect or not, through retrieval of said storage unit when receiving a message transmitted from the node over the Internet protocol network and, when the node is authorized to connect, transmitting an authentication message to the node, the authentication message containing cryptograph information obtained by encrypting address information corresponding to the node with a secret key, and the secret key information.

15. The certificate server according to claim 14, wherein the authentication handling unit recognizes node information for the node from the connection message and includes the node information into the authentication message to notify that the certificate server is a certificate server authenticating the node.

16. A method for handling authentication on an Internet protocol network comprising a number of nodes and a certificate server, the method comprising the steps of:

setting, by the certificate server, at least one node information and address information to be assigned to the nodes;

having access, by an arbitrary node of the nodes, to the certificate server to transmit a message containing the node information;

determining, by the certificate server, whether the node is authorized to access or not when receiving the access message, and when the node is authorized to access, sending to the node an authentication message containing address information and secure information assigned to the node; and

creating, by the node, an Internet protocol address using the address information and handling mutual authentication with the other node through the secure information.

17. The method according to claim 16, wherein the node information is at least one of identification information of the node, password information, and randomly created random number information.

18. The method according to claim 16, wherein the secure information is at least one of secret key information used in the Internet protocol network, address information encrypted with the secret key, and function value information on which a hash function process is performed using at least one of the node information and the secure information as a variable.

19. The method according to claim 16, wherein said certificate server recognizes the node information when receiving a message from the node, and includes the node information into the authentication message.

20. The method according to claim 16, wherein the node determines said certificate server to be a malicious node to terminate the connection when node information, which is the authentication confirmation information, is not contained in the authentication message.

21. The method according to claim 16, wherein the step of processing the mutual authentication includes the substeps of:

sending an authentication request message to the other node when a user requests communication with the other node, and recognizing the secure information from a response message responsive to the authentication request message; and
comparing the secure information for the other node with its own secure information and authenticating the other node when the secure information for the other node is valid.

**22.** A method for handling mutual authentication between a number of nodes in an Internet protocol network comprising a certificate server and the nodes, the method comprising the steps of,

sending, by a first node, an authentication request message obtained by encrypting node information to a second node;

encrypting and sending, by the second node, secure information as a response message responsive to the authentication request message with a secret key transmitted from the certificate server;

decrypting the response message with the secret key transmitted from the certificate server to recognize the secure information for the second node when receiving the response message from the second node, and sending an authentication confirmation message for authenticating the second node when the respective information is the same as the secure information transmitted from the certificate server; and

authenticating, by the second node, the first node when receiving the authentication confirmation message.

**23.** The method according to claim 22, wherein the other node is authenticated by recognizing the secure information for the other node when receiving the authentication confirmation message from the other node, confirming whether the secure information is valid through comparison with secure information transmitted from said certificate server, and authenticating the other node when it is valid.

**24.** A method for handling authentication at nodes in an Internet Protocol version 6 network comprising a certificate server, the method comprising the steps of

sending an authentication request message containing encrypted node information to the other node when communication with the other node is requested;

decrypting a response message received from the other node with a secret key transmitted from the certificate server to recognize secure information for the other node; and

determining whether the recognized secure information is the same as the secure information transmitted from the certificate server and, when the same, sending an authentication confirmation message for authenticating the other node to initiate communication with the other node.

**25.** A method for handling authentication for nodes at a certificate server on an Internet Protocol version 6 network, the method comprising the steps of:

setting at least one node information and address information to be assigned to a relevant node;

when receiving a connection message transmitted from an arbitrary node of the nodes that connects over the Internet protocol network, confirming whether the node is authorized to connect, based on the set node information; and

when the node is authorized to connect, sending an authentication message, the authentication message containing cryptograph information obtained by encrypting the address information corresponding to the node with a secret key, and the secret key information.

**26.** The method according to claim 25, wherein the step of transmitting the authentication message includes the sub-step of recognizing node information for the node from the connection message and including the node information into the authentication message to notify that said certificate server is a certificate server authenticating the node.

# FIG. 1

| IPV6 ADDRESS | |
|---|---|
| NETWORK PREFIX | INTERFACE ID |

# FIG. 2

MAC Address = 00:90:27:17:fc:0f

| 00 | 90 | 27 | 17 | fc | 0f |
|---|---|---|---|---|---|

| 00 | 97 | 27 | | 17 | fc | 0f |
|---|---|---|---|---|---|---|

| ff | fe | — INTERMEDIATE ADDRESS |
|---|---|---|

| 00 | 90 | 27 | ff | fe | 17 | fc | 0f | — INTERFACE ID |
|---|---|---|---|---|---|---|---|---|

# FIG. 3

| 00 | 90 | 27 | ff | fe | 17 | fc | 0f |
|----|----|----|----|----|----|----|----|

b7  b6  b5  b4  b3  b2  b1  b0

| 0 | 0 | 0 | 0 | 0 | 0 | 0 | 0 |
|---|---|---|---|---|---|---|---|

U/L bit = 1

| 02 | 90 | 27 | ff | fe | 17 | fc | 0f |
|----|----|----|----|----|----|----|----|

Lower 64 bit = 00:90:27:ff:fe:17:fc:0f

# FIG. 4

CA — 10

IPV6 SECURITY
NETWORK — 20

31      32      33

| NODE A | | NODE B | | NODE C |

# FIG. 5

| NETWORK INTERFACE UNIT | — 31a |

| ENCRYPTING/DECRYPTING UNIT | — 31b |

— 31

MESSAGE PROCESSING UNIT

31d

— 31c

| ADDRESS PROCESSING UNIT |

NODE

# FIG. 6

| | | |
|---|---|---|
| AUTHENTICATION HANDLING UNIT — 11 | | DB — 12 |
| ENCRYPTING/DECRYPTING UNIT — 13 | | |
| IP INTERFACE UNIT — 14 | | |

— 10

# FIG. 7

```
                    ┌─────────────┐
                    │    START    │
                    └──────┬──────┘
                           │
                           ▼
        ┌──────────────────────────────────────┐
        │      NODE CREATES NS MESSAGE         │── S1
        └──────────────────┬───────────────────┘
                           │
                           ▼
        ┌──────────────────────────────────────┐
        │    ENCRYPT NS MESSAGE WITH PUBLIC KEY │── S2
        │    AND TRANSMITS ENCRYPTED NS MESSAGE │
        └──────────────────┬───────────────────┘
                           │
                           ▼
        ┌──────────────────────────────────────┐
        │  CA DECRYPTS NS MESSAGE WITH PRIVATE KEY │── S3
        └──────────────────┬───────────────────┘
                           │
                           ▼
        ┌──────────────────────────────────────┐
        │  RETRIEVE INTERMEDIATE ADDRESS INFORMATION │── S4
        │    TO BE ASSIGNED TO RELEVANT NODE   │
        └──────────────────┬───────────────────┘
                           │
                           ▼
        ┌──────────────────────────────────────┐
        │        CA CREATES NA MESSAGE         │── S5
        └──────────────────┬───────────────────┘
                           │
                           ▼
        ┌──────────────────────────────────────┐
        │    ENCRYPT NA MESSAGE WITH PUBLIC KEY │── S6
        │   OF NODE AND TRANSMIT ENCRYPTED MESSAGE │
        └──────────────────┬───────────────────┘
                           │
                           ▼
        ┌──────────────────────────────────────┐
        │   NODE RECOGNIZES SECRET KEY INFORMATION │── S7
        │     AND INTERMEDIATE ADDRESS INFORMATION │
        └──────────────────┬───────────────────┘
                           │
                           ▼
        ┌──────────────────────────────────────┐
        │    CREATE IPV6 ADDRESS USING RECOGNIZED │── S8
        │    INTERMEDIATE ADDRESS INFORMATION  │
        └──────────────────┬───────────────────┘
                           │
                           ▼
                    ┌─────────────┐
                    │     END     │
                    └─────────────┘
```

# FIG. 8

START

NODE A ENCRYPTS AUTHENTICATION REQUEST MESSAGE WITH PUBLIC KEY OF NODE B AND TRANSMITS ENCRYPTED MESSAGE — S10

NODE B ENCRYPTS AUTHENTICATION RESPONSE MESSAGE WITH PUBLIC KEY OF NODE A AND TRANSMITS ENCRYPTED MESSAGE — S11

NODE A DECRYPTS AUTHENTICATION RESPONSE MESSAGE WITH ITS PRIVATE KEY AND RECOGNIZES VALUE OF HASH FUNCTION — S12

S13
IS RECOGNIZED HASH FUNCTION VALUE VALID?

NO

TERMINATE CONNECTION — S14

YES

TRANSMIT AUTHENTICATION CONFIRMATION MESSAGE — S15

COMPLETE MUTUAL AUTHENTICATION — S16

END

# FIG. 9

AUTHENTICATION CONNECTION — S20

$EN_{PK(C)}(PW(A), RN(A))$ — S21

$EN_{PK(A)}(RN(A), SS(C), EN_{SS(C)}(DA(A)))$ — S22

$EN_{PK(B)}(RN(A))$ — S23

$EN_{PK(A)}(RN(A), RN(B), h_{2/1}(RN(A), RN(B), DA(A), DA(B)))$ — S24

$EN_{PK(B)}(RN(B), h_{2/2}(RN(A), RN(B), DA(A), DA(B)))$ — S25